# DEMANDE DE BREVET EUROPEEN

(11) **EP 2 886 761 A2**
(43) Date de publication de la demande: **24.06.2015**
(21) Numéro de dépôt: 14199091.1
(22) Date de dépôt: 19.12.2014
(51) Int. Cl.: E05D 3/02

(54) **Dispositif de fermeture pour une embrasure d'un batiment**

(30) Priorité: 20.12.2013 FR 1363223
(71) Demandeur: COMMISSARIAT A L'ENERGIE ATOMIQUE ET AUX ENERGIES ALTERNATIVES, 75015 Paris (FR)
(72) Inventeur: Flechon, Olivier, 73100 Tresserve (FR); Clavelier, Laurent, 38120 Saint-Egreve (FR)
(74) Mandataire: Novaimo

(57) **Abrégé**

Le dispositif comporte au moins un panneau de volet battant (1, 2) s'étendant dans un plan et un module (6A-6D) d'articulation du panneau de volet battant (1, 2) par l'intermédiaire duquel ledit panneau (1, 2) est monté mobile entre une position ouverte, dans laquelle il est placé contre une façade (5) du bâtiment, et une position fermée dans laquelle il est placé devant l'embrasure (4). Le module d'articulation (6A-6D) est adapté pour que le mouvement du panneau de volet (1, 2) entre ses deux positions, ouverte et fermée, comprenne un pivotement autour d'un axe et une translation selon une direction perpendiculaire à l'axe de pivotement.

## Description

La présente invention concerne un dispositif de volet battant pour bâtiment, par exemple pour protéger une fenêtre de la lumière et/ou d'une intrusion.

Dans le domaine du bâtiment, les tailles des fenêtres ne sont pas standardisées. Il en résulte une grande variété de tailles. En moyenne, sur une chaîne de fabrication de fenêtres, la taille des fenêtres à fabriquer est modifiée toutes les deux fenêtres.

Les volets, notamment les volets battants (ou pivotants), généralement posés en feuillure, doivent s'adapter à la taille de l'embrasure de la fenêtre à protéger. Il en résulte une grande diversité également dans les tailles des volets. Or les fabricants de volets peuvent être intéressés pour fabriquer des volets en limitant la gamme de tailles proposées.

La présente invention vient améliorer la situation.

A cet effet, l'invention concerne un dispositif de fermeture pour une embrasure d'un bâtiment comportant au moins un panneau de volet battant et un module d'articulation du panneau de volet battant par l'intermédiaire duquel ledit panneau est monté mobile entre une position ouverte, dans laquelle il est placé contre une façade du bâtiment, et une position fermée dans laquelle il est placé devant l'embrasure, le module d'articulation étant adapté pour que le mouvement du panneau de volet entre ses deux positions, ouverte et fermée, comprenne un pivotement autour d'un axe et une translation selon une direction perpendiculaire à l'axe de pivotement, caractérisé en ce que, le panneau comportant un bord vertical avant et un bord vertical arrière respectivement constitués par le bord vertical le plus éloigné et par le bord vertical le plus proche de l'axe de pivotement, le module d'articulation comporte un axe pivot et une glissière solidaire du panneau qui est adaptée pour coulisser par rapport à l'axe pivot en translation selon l'une des deux directions avant et arrière selon que le panneau est ouvert ou fermé.

La composante de translation du mouvement dans le plan du panneau, perpendiculairement à l'axe picot et vers l'avant ou vers l'arrière (l'avant et l'arrière étant définis par le bord vertical avant et par le bord vertical arrière du panneau), permet de poser le panneau de volet en applique extérieure sur la façade du bâtiment en l'équipant d'un axe de pivotement situé à proximité de l'embrasure tout en faisant déborder latéralement le panneau, en position fermée, au-delà de l'axe de pivotement contre la façade. Lors de l'ouverture du panneau de volet, la composante de translation du mouvement d'ouverture permet de réduire le débordement latéral du panneau de manière à ce que celui-ci ne soit pas bloqué en pivotement par butée de la partie latérale du panneau contre la façade.

Grâce à cela, il n'est pas nécessaire d'adapter avec précision la largeur du panneau de volet à la largeur de l'embrasure.

Avantageusement, la glissière s'étend dans le prolongement de l'un des bords supérieur et inférieur du panneau de volet battant.

Dans une forme de réalisation particulière, le panneau de volet est constitué d'un panneau solaire.

Par « constitué » on entend signifier que le dispositif intègre un panneau, ou module, solaire qui joue lui-même le rôle de volet battant. La totalité, ou la quasi-totalité, du panneau de volet est constituée par des cellules solaires, en dehors éventuellement d'un cadre support du panneau.

La présente invention présente un intérêt spécifiquement dans le cas où le panneau de volet est constitué d'un panneau solaire dont la taille dépend du nombre de cellules et ne peut pas être modifiée à souhait.

Avantageusement, le panneau solaire est bifacial.

Dans une forme de réalisation particulière, le dispositif comprend un moteur destiné à entraîner en déplacement le panneau de volet entre sa position ouverte et sa position fermée. L'invention pourrait toutefois s'appliquer à un panneau de volet manuel, non motorisé.

Dans une autre forme de réalisation particulière, le dispositif comprend au moins un bras télescopique de support du panneau de volet, adapté pour être monté en appui de façon autobloquante contre les parois internes de l'embrasure.

Grâce à cela, le dispositif de fermeture peut être monté très facilement.

Avantageusement, le moteur est logé dans ledit bras.

Dans une forme de réalisation particulière, le dispositif comprend deux bras télescopiques, respectivement supérieur et inférieur, de support du panneau de volet.

Avantageusement, le dispositif comprend une batterie de stockage d'énergie électrique. La batterie permet de stocker de l'énergie électrique pendant les périodes d'ensoleillement et d'utiliser cette énergie ultérieurement, notamment la nuit, pour mettre en oeuvre différentes fonctionnalités.

Dans une forme de réalisation particulière, le dispositif comprend un ventilateur de circulation d'air alimenté électriquement par ladite batterie. L'énergie électrique stockée pendant la journée peut ainsi servir à faire circuler de l'air à travers les ventilateurs, lorsque le panneau de volet est fermé, pendant la nuit.

Le dispositif peut également comprendre un module d'éclairage alimenté électriquement par ladite batterie. L'énergie électrique stockée pendant la journée peut ainsi servir à éclairer l'extérieur et/ou l'intérieur du bâtiment pendant la nuit.

Le dispositif de fermeture peut encore comprendre tout ou partie des caractéristiques additionnelles suivantes :
- le dispositif comprend un module de commande d'ouverture du panneau de volet, agencé pour contrôler la position du panneau de volet en fonction d'informations temporelles de manière à optimiser la production d'électricité ;
- le moteur d'entraînement du panneau de volet est alimenté électriquement par la batterie ;
- le dispositif comprend un module de détection d'ensoleillement destiné à déterminer un niveau d'ensoleillement incident en fonction de données relatives à la quantité d'électricité produite par le panneau solaire ;
- le dispositif comprend un module de contrôle agencé pour contrôler la position du panneau de volet en fonction du niveau d'ensoleillement déterminé de manière à réguler l'ensoleillement à l'intérieur du bâtiment ;
- le panneau est monté en applique extérieure sur la façade du bâtiment ;
- le dispositif comprend deux panneaux de volet battant.

L'invention concerne encore un bâtiment comportant une embrasure, caractérisé en ce qu'il comprend un dispositif de fermeture de ladite embrasure, tel que précédemment défini.

L'invention sera mieux comprise à l'aide de la description suivante d'une forme de réalisation particulière d'un dispositif de volet battant selon l'invention en référence aux dessins annexés sur lesquels :
- La figure 1 représente une vue de face d'une fenêtre d'un bâtiment et d'un dispositif de volet, selon une forme de réalisation particulière de l'invention, à deux battants, en position fermée ;
- Les figures 2A et 2B représentent des vues zoomées d'une articulation du dispositif de volet de la figure 1 en position fermée ;
- La figure 3 représente une vue de face du dispositif de volet de la figure 1 en position ouverte ;
- La figure 4 représente une vue zoomée d'une articulation du dispositif de volet de la figure 1 en position ouverte ;
- La figure 5 représente une vue zoomée d'une articulation du dispositif de volet de la figure 1 en position intermédiaire ;

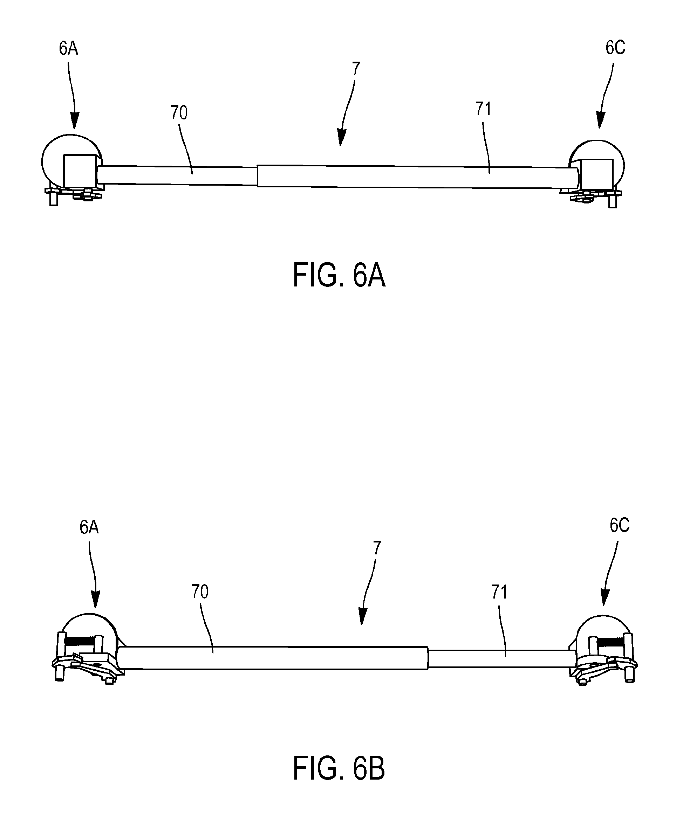

- Les figures 6A et 6B représentent une vue arrière et une vue avant d'un bras de support de panneaux de volet battant du dispositif de la figure 1 ;
- La figure 7 représente une vue de face de deux bras de support de panneaux de volet battant du dispositif de la figure 1, montés dans l'embrasure d'une fenêtre ;
- La figure 8 représente le dispositif de volet positionné pour une optimisation de la production d'énergie ;
- La figure 9 représente un dispositif de volet selon une autre forme de réalisation de l'invention, intégrant des ventilateurs d'aération.

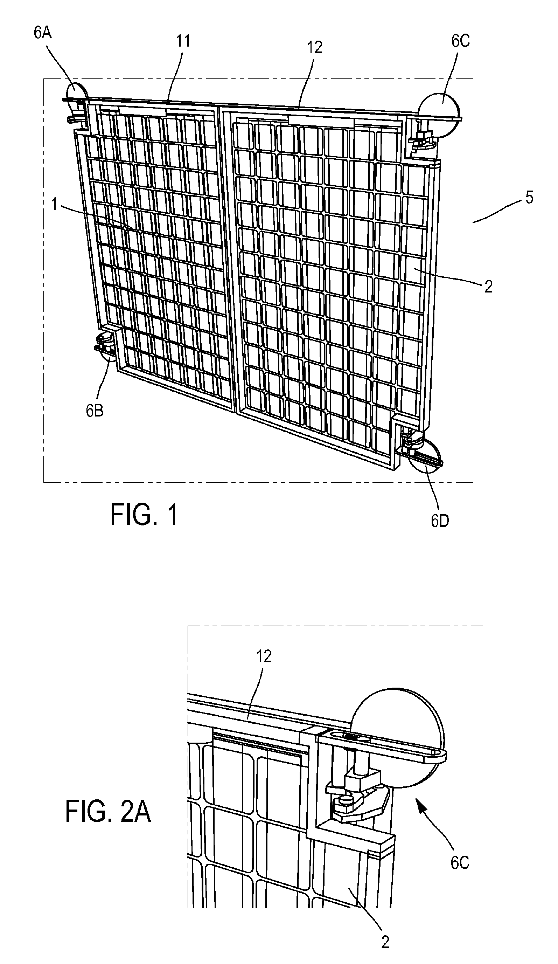

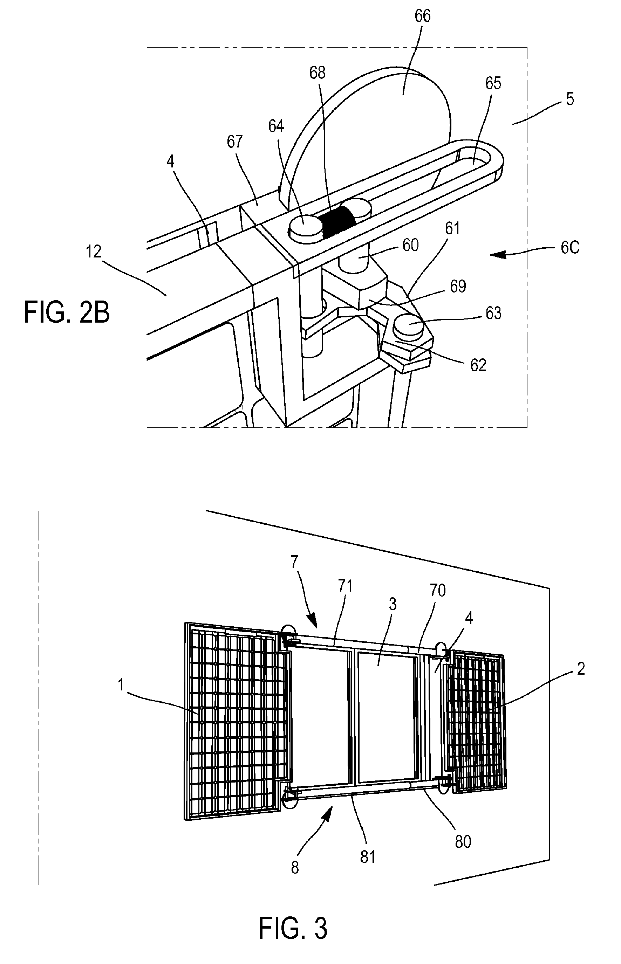

Sur les figures 1 et 3, on a représenté un exemple particulier de réalisation d'un dispositif de fermeture pour une embrasure 4 d'un bâtiment selon l'invention, respectivement en position fermée et en position ouverte.

Le dispositif de fermeture tel que représenté comprend deux panneaux de volet battant, ou pivotant, 1, 2, destinés à protéger et/ou fermer une fenêtre 3 positionnée dans une embrasure 4 d'un bâtiment.

Chaque panneau battant 1 (2) comprend ici un panneau, ou module, solaire photovoltaïque composé d'un assemblage de cellules solaires photovoltaïques, monté à l'intérieur d'un cadre support 11 (12). Le module photovoltaïque occupe la totalité ou la quasi-totalité de la surface du panneau 1, 2, hormis le cadre support 11 (12). Par « quasi-totalité », on entend signifier qu'un nombre réduit de cellules photovoltaïques peut être remplacé par un élément tel qu'un ventilateur, comme cela sera décrit plus loin. En définitive, le module photovoltaïque constitue le panneau battant 1 (2).

Dans l'exemple particulier décrit, les panneaux photovoltaïques sont bifaciaux, c'est-à-dire capables de générer de l'électricité à partir de rayonnements lumineux incidents sur l'une quelconque de leurs faces avant et arrière. Plus précisément, les cellules photovoltaïques composant les panneaux comprennent deux faces, avant et arrière, actives (c'est-à-dire capables de produire de l'électricité à partir de rayonnements lumineux incidents). Par exemple, il peut s'agir de modules photovoltaïques bifaciaux tels que les modules « HIT© Double 195 » de la société SANYO.

Les panneaux photovoltaïques 1, 2 sont ici connectés à une batterie de stockage, destinée à stocker l'énergie électrique produite par les panneaux. En variante, les panneaux photovoltaïques pourraient être reliés à un réseau de collecte d'électricité.

Dans l'exemple de réalisation décrit ici, le dispositif de fermeture comprend un moteur d'entraînement, non représenté, des panneaux de volet battant 1, 2.

Les panneaux battants 1, 2 sont montés en applique extérieure sur la façade 5 du bâtiment. Ils sont mobiles entre une position ouverte telle que représentée sur la figure 3, dans laquelle ils sont placés contre une façade 5 du bâtiment, et une position fermée telle que représentée sur la figure 1, dans laquelle ils sont placés devant l'embrasure 4 de la fenêtre 3.

Le dispositif de fermeture comprend quatre modules 6A à 6D d'articulation des deux panneaux de volet battant 1, 2. Les deux modules 6A et 6B, respectivement 6C et 6D, sont destinés à coopérer pour déplacer le panneau 1, respectivement du panneau 2, entre deux positions, ouverte (figure 3) et fermée (figure 1). Chaque module d'articulation 6A-6D est adapté pour que le mouvement du panneau de volet correspondant entre ses deux positions, ouverte (figure 3) et fermée (figure 1), comprenne une composante de pivotement autour d'un pivot 60, d'axe vertical, et une composante de translation selon une direction perpendiculaire à l'axe du pivot 60.

On va maintenir décrire l'une des articulations, par exemple l'articulation 6C, les autres articulations 6A, 6B et 6D étant analogues. L'articulation 6C comprend un axe pivot 60, un axe d'entraînement 64, une glissière 65, une première et une deuxième biellette 61, 62 et une partie support 66-67.

La glissière, ou coulisse, 65 est adaptée pour recevoir l'axe pivot 60 et l'axe d'entraînement 64, comme représenté sur la figure 2B. L'axe pivot 60 et l'axe d'entraînement 64 sont verticaux. Un ressort de rappel 68 horizontal est interposé entre l'axe pivot 60 et l'axe d'entraînement 64, les deux extrémités du ressort 68 étant fixées respectivement aux deux axes 60, 64. La glissière 65 s'étend latéralement dans le prolongement de la partie supérieure du cadre support 11 (12) du panneau de volet battant 1 (2) et est solidaire de celui-ci. Plus précisément, comme on peut le voir sur les figures 1 et 2B, la glissière 65 s'étend dans le prolongement du bord supérieur du panneau de volet battant 2. De façon analogue, la glissière de l'articulation 6A s'étend dans le prolongement du bord supérieur du panneau 1, et les glissières des articulations 6B et 6D s'étendent dans les prolongements des bords inférieurs des panneaux 1 et 2 respectivement.

La partie support est destinée à être montée fixe dans l'embrasure 4. Elle comprend une plaque 66 d'appui contre la façade 5, ayant ici une forme globale de disque, et un bloc d'appui 67, ayant une forme de cube et destiné à être placé en appui contre un coin interne de l'embrasure 4. L'axe pivot 60 est fixé à un socle horizontal 69 solidaire de la partie support. Lorsque le bloc 67 et la plaque 66 sont montés en appui respectivement contre un coin de l'embrasure 4 et contre la façade 5, le pivot 60 est positionné à proximité de l'embrasure 4, devant la façade 5 à une faible distance de celle-ci.

La première biellette 61 comprend une première extrémité montée fixe sur la partie support 66-67 et une deuxième extrémité supportant un axe 63 d'entraînement en rotation de la deuxième biellette 62, relié à un axe moteur. La deuxième biellette 62 est montée pivotante sur la biellette 61, par l'une de ses extrémités qui est solidaire de l'axe d'entraînement 63. L'autre extrémité de la biellette 62 est solidaire de l'axe d'entraînement 64.

Par définition, les termes « avant » et « arrière » font ici référence aux bords « avant » et « arrière » d'un panneau qui sont respectivement le bord vertical le plus éloigné et le bord vertical le plus proche de l'axe de pivotement du panneau.

Lorsque le panneau 2 est en position fermée, l'articulation 6C est en position rétractée. Dans cette position, la biellette 62 est repliée au-dessus de la biellette 61, et l'axe d'entraînement 64 est en appui contre l'extrémité dite « avant » de la glissière 65 (c'est-à-dire celle reliée au cadre support 12), et à proximité de l'axe pivot 60, le ressort 68 étant comprimé. Le panneau 2 est maintenu dans cette position par tout moyen de blocage adapté.

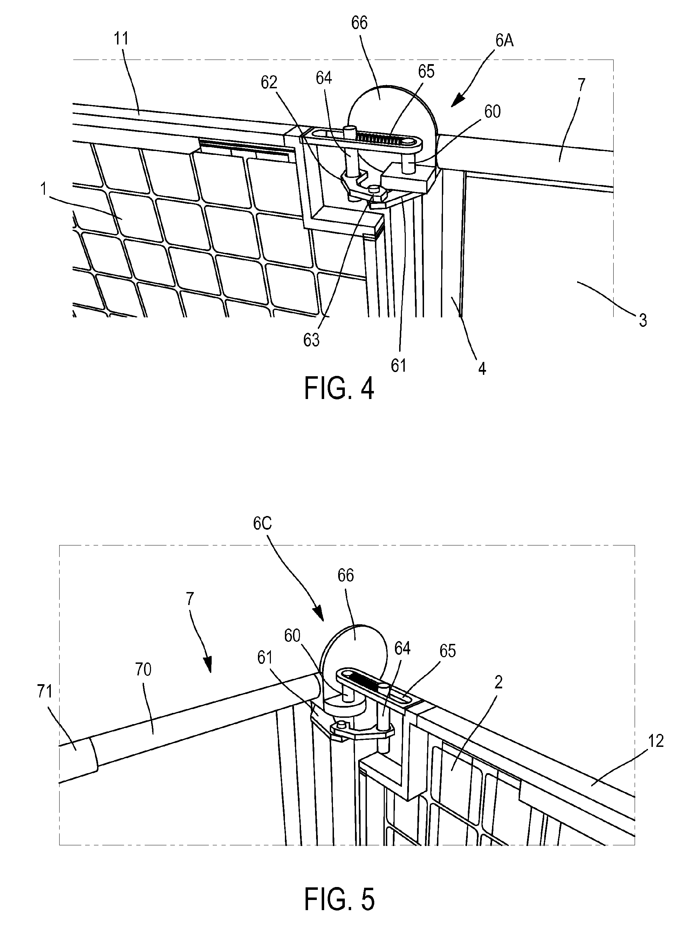

Après déblocage du panneau 2, la glissière 65 est entraînée en déplacement vers l'avant et en pivotement, sous l'action de rappel du ressort 68 et d'entraînement de l'axe 63, qui est lui-même entraîné par le moteur et entraîne à son tour la biellette 62 en rotation. Dans un premier temps, la glissière 65 est entraînée vers l'avant sous l'action de rappel du ressort 68. Dans un deuxième temps, l'extrémité libre arrière, de forme arrondie, de la glissière 65 vient en appui contre la plaque 66 (ou contre la façade 5) et joue un rôle de came de manière à poursuivre le mouvement de translation de la glissière 65 par pivotement de celle-ci. Le mouvement de la glissière 65 comprend donc une composante de translation vers l'avant et une composante de pivotement autour de l'axe pivot 60 dans le sens d'ouverture. La glissière 65 étant solidaire du panneau 2, celui-ci est entraîné de façon analogue en déplacement vers l'avant tout en pivotant dans le sens d'ouverture. La composante de translation du mouvement est adaptée pour venir positionner l'axe pivot 60 à l'extrémité arrière de la glissière 65, comme représenté sur les figures 4 et 5. La glissière 65 est entraînée en translation dans un premier temps sous l'action Grâce à la composante de translation vers l'avant, le débordement latéral arrière du panneau 2 est réduit de manière à permettre au panneau 2 de pivoter sur environ 180° sans être bloqué par butée de son bord arrière contre la façade 5.

Lors de la fermeture, le panneau de volet est entraîné de façon analogue dans un mouvement inverse à celui qui vient d'être décrit, ce mouvement comportant une composante de translation vers l'arrière et une composante de pivotement dans le sens de fermeture autour de l'axe pivot 60.

Le dispositif de fermeture comprend également ici deux bras télescopiques, supérieur 7 et inférieur 8, ayant une double fonction de fixation du dispositif au bâtiment et de support des panneaux de volet battant 1, 2.

Chaque bras 7 (8) comprend deux tubes cylindriques, interne 70 et externe 71, emboîtés et vissés l'un dans l'autre et agencés pour se déployer de façon télescopique entre une position rétractée, dans laquelle le tube interne 70 (80) est logé quasi-intégralement dans le tube externe 71 (81), et une position déployée, dans laquelle le tube interne 70 (80) s'étend quasi-intégralement hors du tube externe 71 (81). Chaque bras 7 (8) comporte à ses deux extrémités libres deux patins d'appui (non représentés) destinés à venir en appui contre les parois internes en vis-à-vis, ou jambages, de l'embrasure 4. Les tubes 70, 71 (80, 81) peuvent être déployés ou rétractés par exemple par un mouvement de rotation de l'un par rapport à l'autre. Cette rotation peut être opérée manuellement par un utilisateur.

Supposons que les bras 7, 8 sont initialement rétractés. Le montage de chaque bras 7 (8) dans l'embrasure 4 de la fenêtre 3 peut s'effectuer de la façon suivante : un utilisateur ajuste la taille du bras 7 (8) à celle de l'embrasure. Dans un premier temps, il déploie le bras 7 (8) par dévissage de manière à ce que la longueur du bras soit légèrement inférieure à la largeur de l'embrasure 4. Il place ensuite le bras 7(8) dans l'embrasure 4, en haut de celle-ci (respectivement en bas), à proximité de la façade, puis continue de dévisser le bras 7 (8) jusqu'à ce que les patins d'extrémité du bras 7 (8) viennent en appui forcé contre les parois latérales internes de l'embrasure 4 et que le bras 7 (8) soit auto-bloqué dans l'embrasure 4. On pourrait prévoir un système de réglage pour finaliser la mise en appui avec une clé. Les bras 7 et 8 sont ainsi fixés aux parois internes ou jambages de l'embrasure 4, de façon autobloquante, par appui contre les jambages de l'embrasure 4, de manière analogue à une tringle de douche.

Les modules d'articulation 6A à 6D sont portés par les extrémités des bras 7,8.

Le moteur, non représenté, est logé dans l'un des bras 7 (8), par exemple le bras supérieur 7.

La batterie de stockage est également logée dans le bras 7 et connectée au moteur de manière à l'alimenter électriquement. Ainsi, le dispositif de fermeture est électriquement autonome et ne nécessite aucune connexion au secteur.

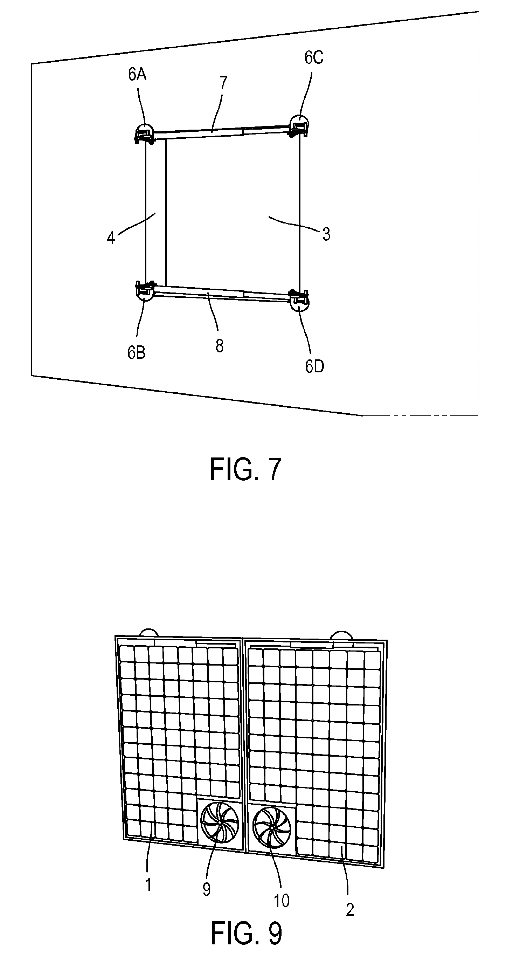

Dans une variante de réalisation décrite en référence à la figure 9, le dispositif de fermeture intègre un ou plusieurs ventilateurs de circulation d'air. Sur la figure 9, chaque panneau 1, 2 intègre un ventilateur 9, 10 positionné en bas du panneau. Chaque ventilateur 9 (10) est monté sur un cadre support 11 (12) du panneau photovoltaïque correspondant 1 (2), par exemple en bas du panneau. Les ventilateurs 9, 10 sont alimentés électriquement par les panneaux photovoltaïques et/ou la batterie de stockage. Ainsi, grâce à l'énergie accumulée durant les périodes d'ensoleillement de la journée, les ventilateurs peuvent être actionnés la nuit, lorsque les panneaux de volet sont fermés, faire amener de l'air frais à l'intérieur.

On peut envisager d'intégrer d'autres fonctions dans le dispositif de fermeture qui vient d'être décrit, ces fonctions étant mises en oeuvre par des modules alimentés électriquement par les panneaux photovoltaïques et/ou la batterie de stockage. Par exemple, le dispositif peut intégrer un ou plusieurs modules d'éclairage adaptés pour éclairer l'extérieur et/ou l'intérieur du bâtiment. L'éclairage peut ainsi être utilisé la nuit grâce à l'énergie électrique accumulée le jour. Un ou plusieurs capteurs anti-intrusion peuvent également être prévus dans le dispositif de fermeture.

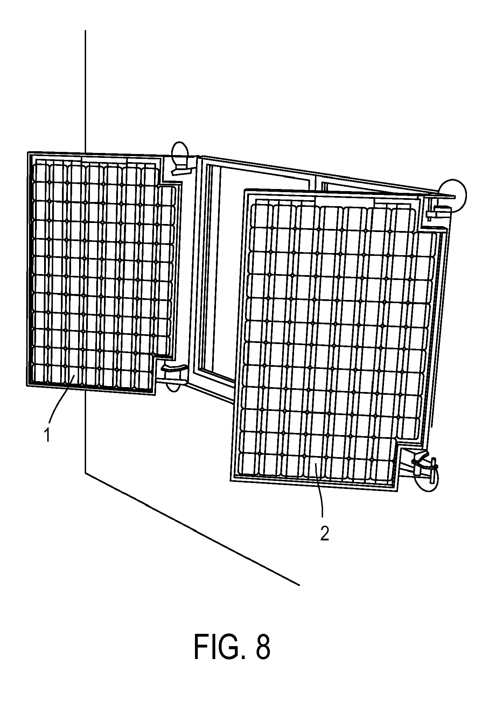

Dans une autre variante de réalisation, le dispositif de fermeture comprend un module d'optimisation de la production d'électricité, comportant une unité de contrôle, par exemple un microprocesseur, et un programme logiciel d'optimisation. Ce module d'optimisation est adapté pour contrôler la position des panneaux, et plus précisément leur angle d'ouverture, et ainsi les orienter de façon optimale par rapport aux rayons solaires incidents, en fonction d'informations temporelles comprenant la date et l'heure, de manière à maximiser la production d'électricité. A titre d'exemple illustratif, on a représenté sur la figure 8 les deux panneaux de volet battant 1, 2 orientés avec des angles d'ouverture respectifs α et (180-α), les deux panneaux étant ainsi parallèles entre eux de manière à être tous les deux orientés de façon optimale par rapport aux rayons solaires incidents.

On pourrait également de transmettre l'énergie électrique produite à un fournisseur d'électricité électrique, dans le cadre d'un accord de revente d'électricité. Dans ce cas, il convient de relier les panneaux photovoltaïques et/ou la batterie à un réseau de collecte d'électricité.

Le dispositif peut également comprendre un module de détection d'ensoleillement jouant le rôle d'un capteur d'ensoleillement. Ce module est adapté pour jouer le rôle d'un pyranomètre et déterminer un niveau d'ensoleillement, ou rayonnement solaire, incident sur les panneaux 1, 2 à partir de données mesurées relatives à la quantité d'électricité produite. Le module de détection d'ensoleillement peut être couplé à un module de contrôle de la position des panneaux 1, 2, agencé pour contrôler la position des panneaux 1, 2 en fonction du niveau d'ensoleillement détecté et réguler ainsi la pénétration de l'ensoleillement à l'intérieur du bâtiment. Le module de contrôle peut par exemple commander une fermeture totale, ou au moins partielle, des panneaux 1,2 lorsque l'ensoleillement dépasse un seuil prédéfini, pendant l'été, de manière à réduire ou supprimer totalement la pénétration des rayons solaires à l'intérieur du bâtiment. Cela permet de limiter l'augmentation de la température à l'intérieur du bâtiment pendant l'été. Ainsi, les données relatives à la production d'électricité par les panneaux photovoltaïques 1, 2 peuvent être utilisées pour contrôler la position des panneaux 1,2 et ainsi réguler la pénétration de l'ensoleillement à l'intérieur du bâtiment.

## Revendications

1. Dispositif de fermeture pour une embrasure (4) d'un bâtiment comportant au moins un panneau de volet battant (1, 2) et un module (6A-6D) d'articulation du panneau de volet battant (1, 2) par l'intermédiaire duquel ledit panneau (1, 2) est monté mobile entre une position ouverte, dans laquelle il est placé contre une façade (5) du bâtiment, et une position fermée dans laquelle il est placé devant l'embrasure (4), le module d'articulation (6A-6D) étant adapté pour que le mouvement du panneau de volet (1, 2) entre ses deux positions, ouverte et fermée, comprenne un pivotement autour d'un axe (60) et une translation selon une direction perpendiculaire à l'axe de pivotement (60), **caractérisé en ce que**, le panneau comportant un bord vertical avant et un bord vertical arrière respectivement constitués par le bord vertical le plus éloigné et par le bord vertical le plus proche de l'axe de pivotement (60), le module d'articulation (6C) comporte un axe pivot (60) et une glissière (65) solidaire du panneau (1, 2) qui est adaptée pour coulisser par rapport à l'axe pivot (60) en translation selon l'une des deux directions avant et arrière selon que le panneau est ouvert ou fermé.

2. Dispositif selon la revendication 1, **caractérisé en ce que** la glissière (65) s'étend dans le prolongement de l'un des bords supérieur et inférieur du panneau de volet battant.

3. Dispositif selon la revendication 1 ou 2, **caractérisé en ce que** le panneau de volet (1, 2) est constitué d'un panneau solaire.

4. Dispositif selon la revendication précédente, **caractérisé en ce que** le panneau solaire (1, 2) est bifacial.

5. Dispositif selon l'une des revendications précédentes, **caractérisé en ce qu'**il comprend un moteur destiné à entraîner en déplacement le panneau de volet (1, 2) entre sa position ouverte et sa position fermée.

6. Dispositif selon la revendication 5, **caractérisé en ce qu'**il comprend au moins un bras télescopique (7, 8) de support du panneau de volet (1, 2), adapté pour être monté en appui de façon autobloquante contre les parois internes de l'embrasure (4).

7. Dispositif selon la revendication 6, **caractérisé en ce que** le moteur est logé dans ledit bras (7).

8. Dispositif selon la revendication 6 ou 7, **caractérisé en ce qu'**il comprend deux bras télescopiques (7, 8), respectivement supérieur et inférieur, de support du panneau de volet (1, 2).

9. Dispositif selon l'une des revendications 2 à 8, **caractérisé en ce qu'**il comprend une batterie de stockage d'énergie électrique.

10. Dispositif selon la revendication précédente, **caractérisé en ce qu'**il comprend un ventilateur (9, 10) de circulation d'air alimenté électriquement par ladite batterie.

11. Dispositif selon la revendication 9 ou 10, **caractérisé en ce qu'**il comprend un module d'éclairage alimenté électriquement par ladite batterie.

12. Dispositif selon l'une des revendications 8 à 10, **caractérisé en ce qu'**il comprend un module de commande d'ouverture du panneau de volet, agencé pour contrôler la position du panneau de volet en fonction d'informations temporelles de manière à optimiser la production d'électricité.

13. Dispositif selon l'une des revendications 8 à 12, **caractérisé en ce que** le moteur d'entraînement du panneau de volet est alimenté électriquement par ladite batterie.

14. Dispositif selon l'une des revendications 2 à 13, **caractérisé en ce qu'**il comprend un module de détection d'ensoleillement destiné à déterminer un niveau d'ensoleillement incident en fonction de données relatives à la quantité d'électricité produite par le panneau solaire.

15. Dispositif selon la revendication précédente, **caractérisé en ce qu'**il comprend un module de contrôle agencé pour contrôler la position du panneau de volet en fonction du niveau d'ensoleillement déterminé de manière à réguler l'ensoleillement à l'intérieur du bâtiment.

16. Dispositif selon l'une des revendications précédentes, **caractérisé en ce que** le panneau est monté en applique extérieure sur la façade (5) du bâtiment.

17. Dispositif selon l'une des revendications précédentes, **caractérisé en ce qu'**il comprend deux panneaux de volet battant (1, 2).

18. Bâtiment comportant une embrasure, **caractérisé en ce qu'**il comprend un dispositif de fermeture de ladite embrasure selon l'une des revendications 1 à 17.
